# FASCICULE DE BREVET EUROPEEN

(11) **EP 1 165 335 B1**
(45) Date de publication et mention de la délivrance du brevet: **22.04.2009**
(21) Numéro de dépôt: 01907690.0
(22) Date de dépôt: 25.01.2001
(51) Int. Cl.: B60H 1/00

(54) **INSTALLATION DE CLIMATISATION DE VEHICULE A TRAITEMENT SEPARE POUR L'ARRIERE DE L'HABITACLE**
KRAFTFAHRZEUGKLIMAANLAGE MIT EINER SEPARATEN BEHANDLUNG FÜR DEN HINTEREN FAHRGASTRAUM
AIR CONDITIONING INSTALLATION WITH SEPARATE TREATMENT FOR REAR SECTION OF PASSENGER COMPARTMENT

(30) Priorité: 28.01.2000 FR 0001136
(43) Date de publication de la demande: 02.01.2002
(73) Titulaire: VALEO SYSTEMES THERMIQUES, 78321 Le Mesnil St Denis Cedex (FR)
(72) Inventeur: VINCENT, Philippe, F-29230 Epernon (FR)
(74) Mandataire: Léveillé, Christophe
(86) Numéro de dépôt international: PCT/FR2001/000231
(87) Numéro de publication internationale: WO 2001/054933

(56) Documents cités:
- EP-A- 1 040 946
- DE-A- 19 801 979
- PATENT ABSTRACTS OF JAPAN vol. 017, no. 368 (M-1443), 12 juillet 1993 (1993-07-12) & JP 05 058144 A (HITACHI LTD), 9 mars 1993 (1993-03-09)

## Description

L'invention concerne une installation de chauffage/ventilation ou de climatisation de l'habitacle d'un véhicule, Selon le préambule de la revendication 1. Une telle installation est, par exemple, connue du document JP-A-05 058 144.
Il est quelquefois souhaité, pour un confort optimal et personnalisé des occupants du véhicule, d'envoyer dans différentes zones d'occupation de l'air dont la température est réglée de manière indépendante.

En particulier, il est souhaité de pouvoir envoyer, dans au moins une zone des places avant et dans au moins une zone des places arrière, de l'air à des températures réglées de manière indépendante. Les installations connues permettant un réglage des températures dans les différentes zones présentent un canal d'air chaud situé entre un canal supérieur d'air froid et un canal inférieur d'air froid. Le canal supérieur et le canal inférieur débouchent respectivement dans une zone de mixage d'air supérieure, alimentant en air traité la zone avant du véhicule par l'intermédiaire de conduits de distribution, et dans une zone de mixage d'air inférieure, alimentant en air traité la zone arrière par l'intermédiaire de conduits arrière. FR 2 778 152 A décrit une telle installation.

Ce type d'installation présente néanmoins l'inconvénient d'une légère interdépendance des températures des différentes zones, l'air pouvant circuler entre la zone de mixage supérieure et la zone de mixage inférieure. D'autre part, une telle installation, réalisée par la superposition de trois canaux, est particulièrement encombrante dans la direction verticale. De plus, le trajet direct réalisé par le canal inférieur empêche une bonne récupération des condensats formés par l'évaporateur.

Le but de l'invention est de permettre un réglage parfaitement indépendant de la température dans différentes zones sans augmenter l'encombrement du boîtier par rapport à une installation classique comportant une chambre de mixage supérieure, et permettant un bon écoulement des condensats.

Un autre but de l'invention est de permettre l'envoi vers le pare-brise de l'air normalement destiné à la zone arrière de l'habitacle, dans le cas où un dégivrage ou un désembuage rapide est nécessaire.

L'invention vise notamment une, installation du genre défini en introduction, et ayant les caractéristiques de la partie caractérisante de la revendication 1.

Des caractéristiques optionnelles de l'invention, complémentaires ou alternatives, sont énoncées ci-après:
- Ladite cloison s'étend sensiblement selon un plan vertical orienté dans la direction avant-arrière du véhicule.
- Ledit élément de trajet raccordé à la seconde sortie est délimité par deux cloisons sensiblement verticales le séparant de deux éléments de trajet passant par la source et raccordés respectivement à une première sortie reliée à au moins une zone gauche et à une première sortie reliée à au moins une zone droite de l'habitacle.
- Chacun desdits éléments de trajet passant par la source de chaleur est en parallèle avec un élément de trajet évitant la source de chaleur, la répartition de l'air entre ces deux éléments de trajet étant assurée par les éléments de commutation.
- La répartition de l'air entre les éléments de trajet passant par la source de chaleur et évitant celle-ci est assurée par des volets associés chacun à l'une des première et seconde sorties et tournant autour d'axes mutuellement parallèles ou autour d'un même axe.
- Les éléments de trajet passant par la source de chaleur et évitant celle-ci sont placés en aval d'un élément de trajet commun passant par une source de froid et parcouru par la totalité du flux d'air.
- L'élément obturateur est propre à détourner l'air vers les sorties de diffusion d'air de la zone avant via un élément de trajet aval situé du même côté de la cloison que les éléments de trajet dont provient cet air et s'étendant parallèlement aux éléments de trajet raccordés à la première sortie.
- L'élément de trajet aval se situe en regard d'un élément de trajet de dégivrage raccordé à la première sortie, et à distance de celui-ci.

Les caractéristiques et avantages de l'invention seront exposés plus en détail dans la description ci-après, en se référant aux dessins annexés.

La figure 1 est une vue schématique du boîtier d'une installation de climatisation selon l'invention et de son contenu, en coupe selon la ligne I-I de la figure 4.

La figure 2 est une vue analogue à la figure 1, en coupe selon la ligne II-II de la figure 4.

La figure 3 est une vue schématique des mêmes éléments en coupe selon la ligne III-III de la figure 2.

La figure 4 est une vue schématique partielle en coupe selon la ligne IV-IV de la figure 2.

Les figures 5 à 8 sont des vues analogues à la figure 2, relatives à des variantes de l'installation.

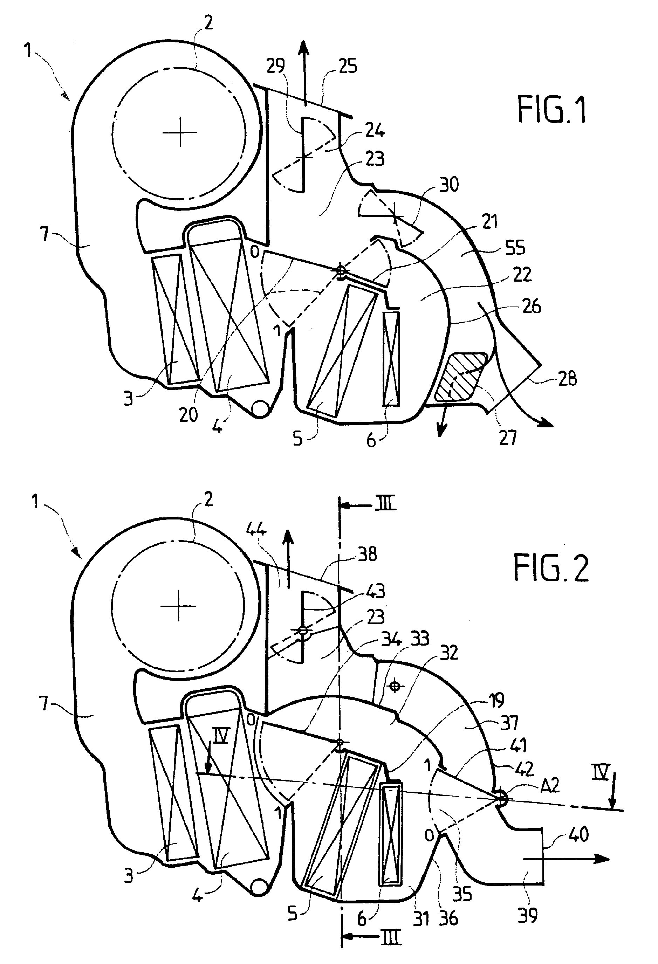

Les figures 1 et 2 sont des vues en coupe selon des plans verticaux orientés dans la direction avant-arrière du véhicule. Le .boîtier 1 de l'installation de climatisation contient en tant qu'éléments principaux de traitement d'air un pulseur 2, un filtre 3, un évaporateur 4, un radiateur de chauffage 5 et une source de chaleur d'appoint 6 telle qu'une résistance électrique à coefficient de température positif. Le pulseur 2 est disposé à la partie supérieure et vers l'avant (par rapport au sens de la marche du véhicule) du boîtier et produit un flux d'air qui circule d'abord de haut en bas dans une conduite 7 située à l'extrémité avant du boîtier, puis circule sensiblement de l'avant vers l'arrière à travers le filtre 3 et l'évaporateur 4, disposés au-dessous du pulseur 2, avant de se répartir dans différents éléments de trajet.

Les éléments de trajet situés en aval de l'évaporateur 4 sont délimités notamment par deux cloisons planes 10 et 11 s'étendant selon des plans verticaux respectifs parallèles au plan de symétrie longitudinal P du véhicule et symétriques l'un de l'autre par rapport à celui-ci. Le radiateur 5 et la source d'appoint 6 s'étendent sur toute la largeur du boîtier 1 en traversant des ouvertures appropriées ménagées dans les cloisons 10 et 11. Celles-ci délimitent trois volumes séparés, à savoir un volume 12 compris entre la paroi de gauche 13 du boîtier et la cloison 10 située à gauche du plan P, un volume 14 compris entre la paroi de droite 15 du boîtier et la cloison 11 située à droite du plan P, et un volume 16 situé entre les cloisons 10 et 11. Chacun des volumes 12, 14 et 16 est subdivisé en éléments de trajet pour l'air par des cloisons et des volets pivotants.

Des cloisons 17, 18 et 19 sont formées en travers des volumes 12, 14 et 16 respectivement immédiatement au-dessus des sources 5 et 6. Les cloisons 18 et 19 sont visibles sur les figures 1 et 2 respectivement. Le volume 12 est aménagé de manière symétrique du volume 14 par rapport au plan P. Un volet papillon 20, 21 est monté pivotant dans le volume 14, autour d'un axe transversal A1 s'étendant le long du bord avant des cloisons 17 à 19, de manière à se déplacer entre une première position extrême symbolisée par le chiffre 0, représentée en trait plein sur la figure 1, dans laquelle ses deux ailes 20, 21 libèrent respectivement l'entrée et la sortie d'un élément de trajet 22 qui passe par les sources 5 et 6 pour aboutir à une chambre de mixage 23 située au-dessus du volet et s'étendant sur toute la largeur du boîtier, l'aile 20 obturant un passage direct de l'évaporateur 4 à la chambre 23, et une autre position extrême symbolisée par le chiffre 1 et représentée en trait interrompu sur la figure 1, dans laquelle les ailes 20 et 21 obturent respectivement l'entrée et la sortie de l'élément de trajet 22, le passage direct à la chambre 23 étant libéré.

À partir de la chambre de mixage 23, des éléments de trajet 24, 44 orientés vers le haut amènent l'air respectivement à des sorties 25, 38 reliées respectivement à un ou plusieurs aérateurs de la zone avant de l'habitacle et aux buses de dégivrage, et un élément de trajet 55 situé en arrière de l'élément de trajet 22 et séparé de celui-ci par une cloison 26 amène l'air à deux sorties 27 et 28 situées à la partie inférieure arrière du boîtier et destinées à alimenter respectivement la zone de pieds de la place avant droite du véhicule et la zone de pieds de la place arrière droite. Des volets pivotants 29, 30 et 43 placés dans les éléments de trajet 24, 55 et 44 respectivement permettent de régler les débits d'air parvenant aux sorties correspondantes.

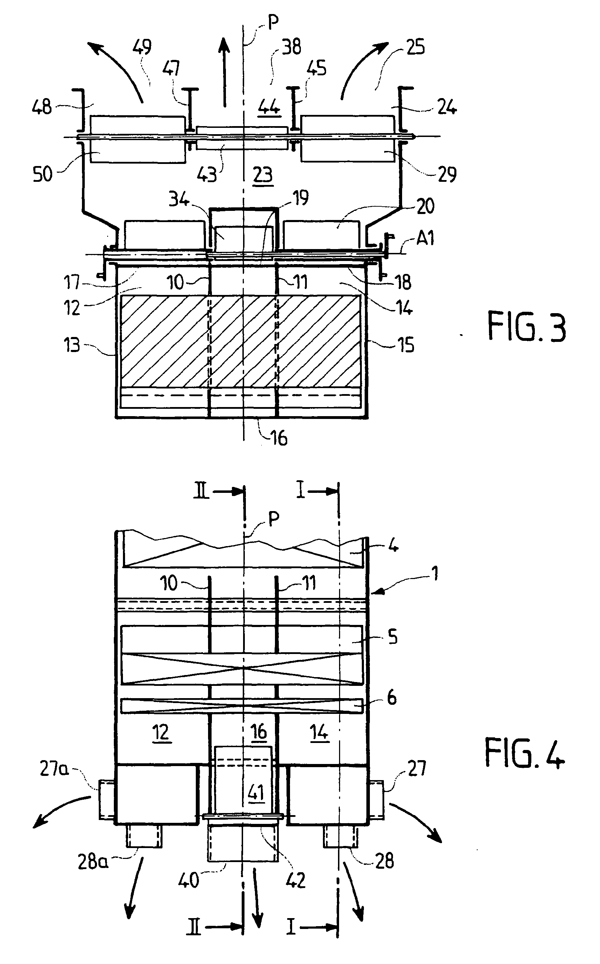

Comme on voit sur la figure 2, le volume 16 est subdivisé par la cloison 19 en un élément de trajet 31 passant par les sources de chaleur 5 et 6 et un élément de trajet 32 évitant celles-ci, l'élément 32 étant délimité vers le haut par une cloison transversale 33 qui relie entre eux les bords supérieurs des cloisons 10 et 11, comme le montre la figure 3. Un volet drapeau 34 est monté pivotant autour d'un axe qui est ici confondu avec l'axe A1 mais pourrait en variante être parallèle à celui-ci, de manière à se déplacer entre une première position extrême notée 0, représentée en trait plein sur la figure 2, dans laquelle son bord libre est adjacent au bord avant de la cloison 33 de manière à obturer l'entrée de l'élément de trajet 32 et à libérer celle de l'élément 31, et une seconde position extrême, notée 1 et représentée en trait interrompu sur la figure 2, dans laquelle les entrées des éléments de trajet 31 et 32 sont respectivement obturées et libérées. À partir de l'extrémité aval des éléments de trajet 31 et 32, une ouverture 35 définie entre le bord arrière de la cloison 33 et la paroi inférieure 36 du boîtier 1 donne accès à deux autres éléments de trajet, à savoir un élément 37 orienté de manière générale vers le haut en direction d'une sortie 38 de dégivrage/désembuage du pare-brise du véhicule et aboutissant à la chambre 23, et un élément 39 orienté généralement vers le bas, aboutissant à une sortie 40 en relation avec une zone de diffusion arrière de l'habitacle. Un volet drapeau 41 peut pivoter autour d'un axe A2 adjacent à la paroi arrière 42 du boîtier 1 pour prendre une première position notée 1 et représentée en trait plein sur la figure 2, dans laquelle son bord libre opposé à l'axe A2 est adjacent au bord arrière de la cloison 33 de manière à obturer l'entrée de l'élément de trajet 37, et une position notée 0, représentée en trait interrompu, dans laquelle le même bord libre est adjacent à la paroi inférieure 36, libérant l'entrée de l'élément de trajet 37 et obturant celle de l'élément de trajet 39. Un volet papillon 43, coaxial au volet 29, est interposé dans l'élément de trajet 44 situé au-dessus de la chambre de mixage 23 et en regard de l'élément de trajet 37.

On voit sur la figure 3 que les sorties 25 et 38 sont juxtaposées dans la direction gauche-droite, l'élément de trajet 24 et l'élément de trajet 44, adjacents à ces sorties et dans lesquels sont logés respectivement les volets 29 et 43, étant séparées par une cloison verticale 45. En revanche, l'élément de trajet 37 communique latéralement avec la chambre de mixage 23 au-dessus de la cloison 11 et au-dessous de la cloison 45. De même, symétriquement des éléments précédents par rapport au plan P, l'élément de trajet 37 communique avec la chambre de mixage 23, dans laquelle débouche le volume 12, au-dessus de la cloison 10 et au-dessous d'une cloison 47 qui sépare l'élément de trajet 44 d'un élément de trajet 48 aboutissant à une sortie d'aération gauche 49. Les autres sorties associées au volume 12, référencées 27a et 28a, sont symétriques des sorties 27 et 28.

La répartition de l'air traité entre les différentes sorties du boîtier 1, et la température des flux d'air traversant celles-ci, sont déterminées par les positions des volets décrits ci-dessus, définissant cinq modes de fonctionnement de l'installation résumés dans le tableau ci-après.

| Mode | Position des volets | | | | | |
|---|---|---|---|---|---|---|
| | 20,21 | 34 | 41 | 43 | 30⁺ | 29 et 50 |
| A | 0 | 0 | 0 | ouvert | fermés*** | fermés*** |
| B | réglable | 0 | 0 | ouvert | fermés*** | fermés*** |
| C | réglable | réglable* | 0 | ouvert | fermés*** | fermés*** |
| D | réglable | réglable** | 1 | réglable | réglables | réglables |
| E | réglable | réglable* | 0 | réglable | réglables | réglables |

| | | | | | | |
|---|---|---|---|---|---|---|
| ⁺ et équivalent du côté gauche * réglage par commande avant ** réglage par commande arrière *** un léger débit d'air peut être admis | | | | | | |

Dans le mode A, toutes les sorties d'air sont fermées à l'exception de la sortie de dégivrage 38 qui est ouverte, et la totalité de l'air traité est chauffée par les sources 5 et 6. Le pare-brise reçoit donc de l'air à un débit maximal et à une température maximale. Cette configuration peut être imposée par un bouton-poussoir placé sur le tableau de commande principal de l'installation de manière à assurer le plus rapidement possible le dégivrage du pare-brise.

Le mode B diffère du mode A en ce que la position des volets de mixage latéraux est réglable, permettant au conducteur de régler la température de l'air qui est ici encore envoyé en totalité vers le pare-brise pour le dégivrage ou le désembuage.

Ceci vaut également pour le mode C, dans lequel la position du volet de mixage médian est en outre également réglable par le conducteur.

Le mode D est celui qui permet d'alimenter en air la zone avant et la zone arrière de l'habitacle, la température de l'air de la zone avant étant réglée par les passagers avant grâce au volet 20, 21 et la température de l'air de la zone arrière étant réglée par les passagers arrière grâce au volet 34. La diffusion de l'air vers l'arrière est réalisée grâce au volet 41. La répartition de l'air aux autres sorties peut être effectuée à volonté grâce à la commande des volets correspondants.

Enfin, le mode E peut être mis en oeuvre lorsque la diffusion arrière est fermée, c'est-à-dire lorsque la zone arrière de l'habitacle est inoccupée ou que le passager arrière ne souhaite pas recevoir d'air. L'air circulant dans le volume médian 16 est alors envoyé vers les sorties 25, 27, 27a, 28, 28a, 38 et 49 où il est mélangé à l'air circulant dans les volumes 12 et 14, sa température pouvant être réglée par le conducteur grâce au volet 34.

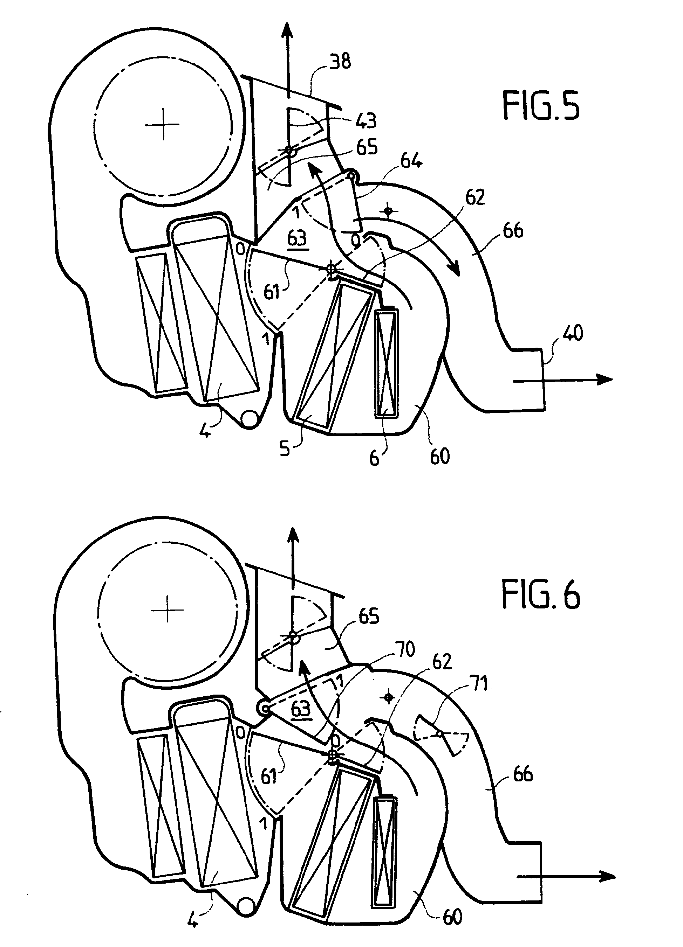

L'installation de la figure 5 diffère de celle des figures 1 à 4 en ce que l'élément de trajet 60 du volume médian 16 en contact avec les sources de chaleur 5 et 6 a la même configuration que l'élément de trajet 22, son entrée et sa sortie étant commandées respectivement par les ailes 61 et 62 d'un volet semblable au volet 20, 21. L'air provenant de l'évaporateur 4 peut donc parvenir à une chambre de mixage 63, en passant soit par l'élément de trajet 60, soit par un passage direct obturable par l'aile 61. Un volet drapeau 64 ayant la même fonction que le volet 41 est disposé au-dessus des sources de chaleur et permet de relier la chambre 63, soit à un court élément de trajet 65 orienté vers le haut et pouvant aboutir aux sorties 25, 38, 49, 27, 27a, 28, 28a, soit à un élément de trajet plus long 66 orienté généralement vers le bas à l'arrière du boîtier, aboutissant à la sortie 40. Par rapport à celle de la figure 2, cette disposition allonge le trajet de l'air chaud envoyé à la sortie 40, et raccourcit le trajet de l'air froid envoyé aux sorties 25, 38, 49, 27, 27a, 28, 28a. Elle permet les modes de fonctionnement A à E décrits ci-dessus.

Le boîtier de la figure 6 délimite un élément de trajet 60 semblable à celui de la figure 5 et contient un volet 61, 62 également semblable à celui de la figure 5. Le volet 64 est remplacé par un volet drapeau 70 qui, dans sa position 0 représentée en trait plein, obture le passage direct de l'évaporateur 4 à la chambre de mixage 63 et permet le passage de l'élément de trajet 60 vers l'élément de trajet 65, et, dans la position 1 représentée en trait interrompu, obture le passage de la chambre 63 à l'élément de trajet 65. Un volet supplémentaire 71 disposé dans l'élément de trajet 66 et conjugué au volet 70 permet d'obturer celui-ci.

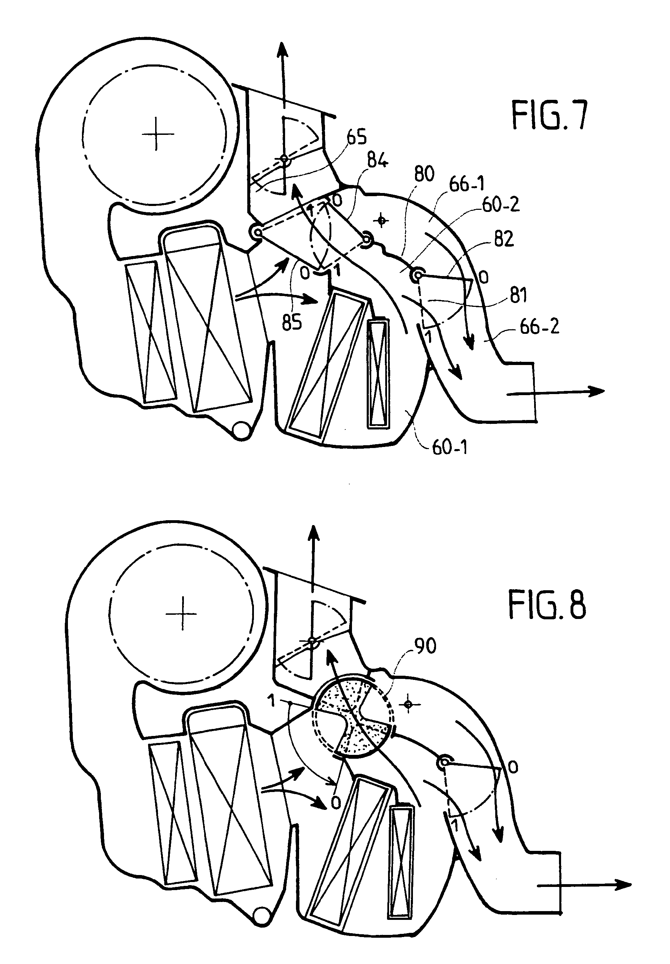

Dans le mode de réalisation de la figure 7, la cloison 80 qui sépare l'un de l'autre les éléments de trajet 60 et 66 tels qu'ils existent dans les modes de réalisation des figures 5 et 6 est interrompue par une ouverture 81, subdivisant l'élément de trajet 60 en un élément 60-1 en amont de l'ouverture et un élément 60-2 en aval de l'ouverture, et l'élément 66 en un élément 66-1 en amont de l'ouverture et un élément 66-2 en aval de l'ouverture. Un volet drapeau 82 articulé au bord supérieur de l'ouverture 81 peut prendre une position 0, représentée en trait plein, dans laquelle il sépare les éléments de trajet 66-1 et 66-2 et fait communiquer entre eux les éléments 60-1 et 66-2, et une position 1 représentée en trait interrompu, dans laquelle il obture l'ouverture 81 en rétablissant la continuité de l'élément de trajet 66. Deux volets drapeau 84 et 85 placés en aval de l'élément de trajet 60-2 et en amont des éléments de trajet 65 et 66-1 peuvent être placés conjointement dans une position 0 représentée en trait plein ou dans une position 1 représentée en trait interrompu. Dans la position 0, les volets 84 et 85 obturent respectivement l'entrée de l'élément de trajet 66-1 et le passage de l'air froid provenant de l'évaporateur 4 en direction des différentes sorties et libèrent le passage de l'air de l'élément de trajet 60-2 à l'élément de trajet 65. Dans la position 0, les volets 84 et 85 obturent respectivement la sortie de l'élément de trajet 60-2 et l'entrée de l'élément de trajet 65, et libèrent le passage de l'air de l'évaporateur 4 à l'élément de trajet 66-1.

Le mode de réalisation de la figure 8 diffère de celui de la figure 7 en ce que les volets drapeau 84 et 85 sont remplacés par un volet tambour 90 ayant exactement la même fonction.

Les modes de réalisation des figures 6 à 8 permettent les modes de fonctionnement A, B et D, mais non les modes C et E.

Les boîtiers décrits et représentés peuvent, avec des aménagements mineurs, être utilisés dans des installations simplifiées permettant une alimentation en air de la zone arrière de l'habitacle sans réglage séparé de température, ou ne permettant pas une alimentation de la zone arrière. Ceci permet une rationalisation de la production et par conséquence une réduction du coût de fabrication.

## Revendications

1. Installation de chauffage/ventilation ou de climatisation de l'habitacle d'un véhicule, comprenant un boîtier (1.) contenant des moyens de traitement d'un flux d'air à envoyer dans l'habitacle, lesdits moyens comportant au moins une source de chaleur (5, 6) et des éléments de commutation (20, 21, 29, 30 34, 41, 43,64, 71, 82) commandées de manière à définir des trajets variables pour ledit flux d'air entre une entrée et diverses sorties (25, 27, 28, 27a, 28a, 38, 40, 49) associées à des zones respectives de l'habitacle, passant ou non par ladite source de chaleur (5, 6), le boîtier (1) contenant en outre deux cloisons sensiblement verticales (10, 11) traversées par ladite source de chaleur (5, 6) et séparant les uns des autres trois éléments de trajet (22, 31, 60) passant par la source de chaleur (5, 6), deux desdits éléments de trajet (22), raccordés à des premières sorties (25, 27, 28, 27a, 28a, 38, 49) reliées à au moins une première zone de l'habitacle, qui est la zone avant de l'habitacle, étant séparés par les cloisons verticales (10, 11) respectivement du troisième élément de trajet (31, 60), raccordé à une seconde sortie (40) reliée à au moins une seconde zone de l'habitacle, qui est la zone arrière de l'habitacle,
**caractérisé en ce que** les éléments de commutation comprennent un volet (41, 64, 71, 82) apte à obturer l'entrée d'un élément de trajet (39; 66; 66-2) aboutissant à la seconde sortie (40) en relation avec la seconde zone de l'habitacle et à détourner l'air circulant dans les éléments de trajet (24, 44, 65) correspondants vers les premières sorties (25, 27, 28, 27a, 28a, 38, 49).

2. Installation selon la revendication 1 , dans laquelle ladite cloison (10, 11) s'étend sensiblement selon un plan vertical orienté dans la direction avant-arrière du véhicule.

3. Installation selon l'une des revendications précédentes,
dans laquelle lesdites premières sorties comprennent au moins une sortie (27a, 28a) reliée à au moins une zone gauche et au moins une sortie (27, 28) reliée à au moins une zone droite de l'habitacle, raccordées respectivement auxdits deux éléments de trajet.

4. Installation selon l'une des revendications précédentes,
dans laquelle chacun desdits éléments de trajet (31, 60, 60-1, 60-2) passant par la source de chaleur (5, 6) est en parallèle avec un élément de trajet évitant la source de chaleur (5, 6), la répartition de l'air entre ces deux éléments de trajet étant assurée par les éléments de commutation (20, 21, 34).

5. Installation selon la revendication 4, dans laquelle la répartition de l'air entre les éléments de trajet passant par la source de chaleur (5, 6) et évitant celle-ci est assurée par des volets (20, 21, 34) associés chacun à l'une des première (25, 49) et seconde (40) sorties et tournant autour d'axes mutuellement parallèles ou autour d'un même axe (A1).

6. Installation selon l'une des revendications 4 et 5, dans laquelle les éléments de trajet (31, 60, 60-1, 60-2) passant par la source de chaleur (5, 6) et évitant celle-ci sont placés en aval d'un élément de trajet commun passant par une source de froid (4) et parcouru par la totalité du flux d'air.

7. Installation selon l'une des revendications précédentes,
dans laquelle l'élément obturateur est propre à détourner l'air vers les sorties de diffusion d'air de la zone avant via un élément de trajet aval (37) situé du même côté de la cloison que les éléments de trajet (31) dont provient cet air et s'étendant parallèlement aux éléments de trajet (55) raccordés à la première sortie (28).

8. Installation selon la revendication 7, dans laquelle l'élément de trajet aval (37) se situe en regard d'un élément de trajet (44) de dégivrage raccordé à la première sortie (28), et à distance de celui-ci.

## Claims

1. Heating/ventilation or air conditioning installation of a vehicle interior, comprising a housing (1) containing means of treating an air flow to be directed into the vehicle interior, wherein said means comprise at least one heat source (5, 6) and switching means (20, 21, 29, 30, 34, 41, 43, 64, 71, 82) commanded so as to define variable trajectories for said air flow between an inlet and various outlets (25, 27, 28, 27a, 28a, 38, 40, 49) associated to respective zones of the vehicle interior, passing or not through said heat source (5, 6), wherein the housing (1) further contains two separations that are substantially vertical (10, 11) through which passes the heat source (5, 6) and which separate from one another three trajectory elements (22, 31, 60) which pass via the heat source (5, 6), wherein two of said trajectory elements (22), connected to first outlets (25, 27, 28, 27a, 28a, 38, 49) joined to at least one first zone of the vehicle interior, which is the front zone of the vehicle interior, are separated by the vertical separations (10, 11) respectively from the third trajectory element (31, 60), joined to a second outlet (40) connected to at least one second zone of the vehicle interior, which is the rear zone of the vehicle interior, **characterised in that** the switching elements comprise a flap (41, 64, 71, 82) that is able to seal the inlet of a trajectory element (39, 66, 66-2) which opens out onto the second inlet (40) that is connected to the second zone of the vehicle interior and deflects the air circulating in the corresponding trajectory elements (24, 44, 65) towards the first outlets (25, 27, 28, 27a, 28a, 38, 49).

2. Installation according to claim 1, wherein said separation (10, 11) substantially extends according to a vertical plane orientated in the front - rear direction of the vehicle.

3. Installation according to any of the previous claims, wherein said first outlets comprise at least one outlet (27a, 28a) connected to at least one left zone and at least one outlet (27, 28) connected to at least one right zone of the vehicle interior, respectively connected to said two trajectory elements.

4. Installation according to any of the previous claims, wherein each of said trajectory elements (31, 60, 60-1, 60-2) which pass via the heat source (5, 6) is in parallel to a trajectory element which avoids the heat source (5, 6), wherein the distribution of the air between these two trajectory elements is provided by the switching elements (20, 21, 34).

5. Installation according to claim 4, wherein the distribution of the air between the trajectory elements which pass via the heat source (5, 6) and which avoid it is provided by flaps (20, 21, 34) that are each associated to one of the first (25, 49) and second (40) outlets and which rotate around mutually parallel axes or around a same axis (A1).

6. Installation according to any of claims 4 and 5, wherein the trajectory elements (31, 60, 60-1, 60-2) which pass via the heat source (5, 6) and which avoid it are positioned downstream of a common trajectory element which passes via a cold source (4) and through which all of the air flow passes.

7. Installation according to any of the previous claims, wherein the sealing element is able to deflect the air towards the air diffusion outlets of the front zone via a downstream trajectory element (37) situated on the same side of the separation as the trajectory elements (31) from which the air comes from and which extend in parallel to the trajectory elements (55) connected to the first outlet (28).

8. Installation according to claim 7, wherein the downstream trajectory element (37) is positioned opposite a defrosting trajectory element (44) connected to the first outlet (28) and at a distance from the latter.

## Patentansprüche

1. Heizungs-/Belüftungs- oder Klimasteuerungsanlage des Fahrgastraums eines Fahrzeugs, umfassend ein Gehäuse (1), das Mittel zur Behandlung eines Luftflusses umfasst, der in den Fahrgastraum auszusenden ist, wobei die Mittel mindestens eine Wärmequelle (5, 6) und Schaltelemente (20, 21, 29, 30, 34, 41, 43, 64, 71, 82) umfassen, die so gesteuert sind, dass sie veränderbare Strecken für den Luftfluss zwischen einem Eintritt und verschiedenen Austritten (25, 27, 28, 27a, 28a, 38, 40, 49) definieren, die entsprechenden Bereichen des Fahrgastraums zugeordnet sind, wobei die Wärmequelle (5, 6) passiert wird oder nicht, wobei das Gehäuse (1) des Weiteren zwei im Wesentlichen senkrechte Trennwände (10, 11) umfasst, die von der Wärmequelle (5, 6) durchsetzt werden und drei Streckenelemente (22, 31, 60), die durch die Wärmequelle (5, 6) verlaufen, voneinander trennen, wobei zwei der Streckenelemente (22), die an erste Austritte .(25, 27, 28, 27a, 28a, 38, 49) angeschlossen sind, die mit mindestens einem ersten Bereich des Fahrgastraums verbunden sind, der der vordere Bereich der Fahrgastraums ist, durch die senkrechten Trennwände (10, 11) jeweils vom dritten Streckenelement (31, 60) getrennt werden, das an einen zweiten Austritt (40) angeschlossen ist, der mit mindestens einem zweiten Bereich des Fahrgastraums verbunden ist, der der hintere Bereich der Fahrgastraums ist, **dadurch gekennzeichnet, dass** die Schaltelemente eine Kappe (41, 64, 71, 82) umfassen, die imstande ist, den Eintritt eines Streckenelements (39; 66; 66-2), das in den zweiten Austritt (40) mündet, der mit dem zweiten Bereich des Fahrgastraums verbunden ist, zu verschließen, und die Luft, die in den entsprechenden Streckenelementen (24, 44, 65) zirkuliert, zu den ersten Austritten (25, 27, 28, 27a, 28a, 38, 49) umzuleiten.

2. Anlage nach Anspruch 1, wobei sich die Trennwand (10, 11) im Wesentlichen entlang einer senkrechten Ebene erstreckt, die in Vorder-Rück-Richtung des Fahrzeugs ausgerichtet ist.

3. Anlage nach einem der vorhergehenden Ansprüche, wobei die ersten Austritte mindestens einen Austritt (27a, 28a), der mit mindestens einem linken Bereich verbunden ist, und mindestens einen Austritt (27, 28), der mit mindestens einem rechten Bereich des Fahrgastraums verbunden ist, umfassen, die jeweils an die zwei Streckenelemente angeschlossen sind.

4. Anlage nach einem der vorhergehenden Ansprüche, wobei jedes der Streckenelemente (31, 60, 60-1, 60-2), die durch die Wärmequelle (5, 6) verlaufen, parallel zu einem Streckenelement angeordnet ist, das die Wärmequelle (5, 6) umgeht, wobei die Verteilung der Luft zwischen diesen zwei Streckenelementen durch die Schaltelemente (20, 21, 34) sichergestellt wird.

5. Anlage nach Anspruch 4, wobei die Verteilung der Luft zwischen den Streckenelementen, die durch die Wärmequelle (5, 6) verlaufen und diese umgehen, durch Klappen (20, 21, 34) sichergestellt wird, die jeweils einem der ersten (25, 49) und zweiten (40) Austritte zugeordnet sind und sich um zueinander parallele Achsen oder um eine gleiche Achse (A1) drehen.

6. Anlage nach einem der Ansprüche 4 und 5, wobei die Streckenelemente (31, 60, 60-1, 60-2), die durch die Wärmequelle (5, 6) verlaufen und diese umgehen, einem gemeinsamen Streckenelement nachgelagert sind, das durch eine Kältequelle (4) verläuft und .vom gesamten Luftfluss durchströmt wird.

7. Anlage nach einem der vorhergehenden Ansprüche, wobei das Verschlusselement dazu dient, die Luft zu den Luftausströmungsaustritten des vorderen Bereichs über ein nachgelagertes Streckenelement (37) umzuleiten, das sich auf derselben Seite der Trennwand befindet wie die Streckenelemente (31), von denen diese Luft stammt und die sich parallel zu den Streckenelementen (55) erstrecken, die an den ersten Austritt (28) angeschlossen sind.

8. Anlage nach Anspruch 7, wobei sich das nachgelagerte Streckenelement (37) gegenüber einem Streckenelement (44) zur Entfrostung, das an den ersten Austritt (28) angeschlossen ist, und von diesem beabstandet befindet.
